# EUROPÄISCHE PATENTSCHRIFT

(11) **EP 0 802 221 B1**
(45) Veröffentlichungstag und Bekanntmachung des Hinweises auf die Patenterteilung: **07.06.2006**
(21) Anmeldenummer: 97104227.0
(22) Anmeldetag: 13.03.1997
(51) Int. Cl.: C08K 3/36, C08K 9/00, C01B 33/12

(54) **Füllstoff auf Siliciumdioxid-Basis, Verfahren zu seiner Herstellung und seine Verwendung**
Silica based filler, process for its production and use thereof
Charge à base de silice, procédé pour sa production et son utilisation

(30) Priorität: 20.04.1996 DE 19615763
(43) Veröffentlichungstag der Anmeldung: 22.10.1997
(73) Patentinhaber: Heraeus Kulzer GmbH, 63450 Hanau (DE)
(72) Erfinder: Heindl, Detlef, Dr., 35796 Weinbach (DE); Erdrich, Albert, Dr., 61231 Bad Nauheim (DE)
(74) Vertreter: Kühn, Hans-Christian

(56) Entgegenhaltungen:
- EP-A- 0 172 513
- DD-A- 250 310
- DE-A- 2 853 647

## Beschreibung

Die Erfindung betrifft einen feinteiligen Füllstoff auf Siliciumdioxid-Basis, ein Verfahren zu seiner Herstellung und seine Verwendung in polymerisierbaren Materialien. Die Erfindung bezieht sich besonders auf einen feinteiligen Füllstoff auf Siliciumdioxid-Basis für durch Polymerisation aushärtende Dentalmaterialen, vorzugsweise für solche zur Herstellung von Zahnfüllungen.

Auf dem Gebiet der durch Polymerisation aushärtenden Zahnfüllungsmaterialien bedeutete es einen großen Fortschritt, als Rafael L. Bowen anstelle des bis dahin darin verwendeten Methylmethacrylats langkettige monomere Dimethacrylate - Reaktionsprodukte des Bisphenol A und seiner Derivate mit Glycidylmethacrylat, besonders das sogenannte Bis-GMA, - und zur Verstärkung der Kunststoff-Matrix feines Quarzglas-Pulver einführte (US 3 066 112 A).

Ein weiteres Beispiel für ein Dentalmaterial, das neben organischen Monomeren einen feinteiligen anorganischen Füllstoff enthält, wird in US 3 539 533 A beschrieben. Das polymerisierbare Bindemittel ist dabei eine Mischung aus Bis-GMA, Bisphenol A-dimethacrylat, verdünnendem Monomer, besonders Triethylenglykoldimethacrylat, und gegebenenfalls Methacrylsäure in geringer Menge, das zusammen mit etwa 65 - 75 Gewichts-% des anorganischen Füllstoffs, zum Beispiel Siliciumdioxid, Glas, Aluminiumoxid oder Quarz, verwendet wird. Der anorganische Füllstoff kann eine Teilchengröße von etwa 2-85 Mikrometer besitzen; zur Verbesserung des Verbundes Kunststoff/Füllstoff wird er mit einem Silan, zum Beispiel 3-Methacryloyloxypropyltrimethoxysilan, vorbehandelt.

Aus DE 24 03 211 C3 ist ein Werkstoff für Dentalzwecke (Füllungsmaterialien für Kavitäten, Materialien für Befestigungszemente, Versiegelungs- und Schutzüberzugsmassen, Kronen- und Brückenmaterialien, Prothesenmaterialien, Massen zur Herstellung künstlicher Zähne) bekannt, der neben polymerisierbarem Acrylat beziehungsweise Methacrylat als anorganischen Füllstoff mikrofeines (hochdisperses) Siliciumdioxid mit einer Teilchengröße von etwa 0,01 - 0,4 Mikrometer und einer BET-Oberfläche von weniger als etwa 200 m²/g enthält. Das polymerisierbare Monomer besteht dabei aus Bis-GMA oder einem anderen Derivat des Bisphenol A oder einem Reaktionsprodukt aus Hydroxyalkylmethacrylaten und Diisocyanaten, gegebenenfalls zusammen mit monomeren kurzkettigen Methacrylaten und/oder Diacrylaten beziehungsweise Dimethacrylaten. Die aus dem den mikrofeinen Füllstoff enthaltenden Werkstoff hergestellten Zahnfüllungen und dergleichen zeichnen sich durch ihre Hochglanzpolierbarkeit und durch eine der Transparenz natürlicher Zähne ähnliche Transparenz aus.

Einen weiteren Schritt in der Entwicklung von Dentalmaterialien auf Kunststoff-Basis stellen die sogenannten Hybrid-Materialien dar, die sowohl mikrofeine Füllstoffe als auch konventionelle Füllstoffe (Makrofüllstoffe) enthalten. Ein solches Dentalmaterial ist zum Beispiel aus DE 24 05 578 C3 bekannt. Es enthält 30 - 80 Gewichts-% einer Mischung aus durch Flammhydrolyse hergestellter amorpher Kieselsäure (pyrogenes Siliciumdioxid) mit einer maximalen Teilchengröße von 0,07 Mikrometer und feinteiligem Glas, bevorzugt Borsilicatglas, Barium- oder Lanthanoxid enthaltendes Glas oder Lithiumaluminiumsilicatglas, mit einer Teilchengröße bis zu 5 Mikrometer.

Das in DE 34 03 040 A1 beschriebene dentale Füllungsmaterial enthält 60 - 90 Gewichts-% eines Füllstoff-Gemisches aus 5 - 20 Gewichts-% eines röntgenopaken Füllstoffs mit einer Korngrößenverteilung zwischen 0,5 und 40 Mikrometer, 20 - 35 Gewichts-% eines röntgenopaken Füllstoffs mit einer Korngrößenverteilung zwischen 0,2 und 15 Mikrometer und 45 - 75 Gewichts-% eines Siliciumdioxid-Mikrofüllstoffs mit einer Korngrößenverteilung zwischen 5 und 150 Nanometer.

Ein weiteres Beispiel für ein Hybrid-Material ist die in EP 382 033 A2 beschriebene Dentalmasse, die neben polymerisierbaren Acrylaten oder Methacrylaten und einem Katalysator für die Photopolymerisation (Photoaktivator) 5 - 80 Gewichts-% eines silanisierten Glases oder einer silanisierten Glaskeramik mit einer mittleren Teilchengröße zwischen 0,1 und 10 Mikrometer und 2-10 Gewichts-% eines oberflächenbehandelten Mikrofüllers enthält.

Die zur Verstärkung von Dentalmaterialien auf Kunststoff-Basis eingesetzten anorganischen Füllstoffe besitzen meist eine mit einem Silan, zum Beispiel 3-Methacryloyloxypropyltrimethoxysilan, behandelte Oberfläche, die die Verträglichkeit mit den organischen Bestandteilen verbessert (DE 34 03 040 A1) und eine chemische Haftung zwischen dem Füllstoff und der Kunststoff-Matrix bewirkt. Eine weitere Verbesserung des Füllstoff/Kunststoff-Verbundes kann erreicht werden, wenn zusätzlich zu der chemischen Haftung die Möglichkeit einer physikalischen Haftung besteht. Eine physikalische Haftung lässt sich beispielsweise nach einem Vorschlag in US 4 215 033 A durch die Verwendung eines durch Ätzen eines Zweiphasen-Glases erhaltenen semiporösen Füllstoffs schaffen. Die Tiefe der an der Oberfläche vorhandenen Poren beträgt 10-10 000 Angström.

Poröse Füllstoffe enthaltende Dentalmaterialien sind zum Beispiel auch aus US 4 217 264 A, EP 0 048 681 B1 und EP 0 172 513 B1 bekannt.

Das in US 4 217 264 A beschriebene polymerisierbare Dentalmaterial enthält neben monomeren Methacrylsäureestern und einem Katalysator für die Polymerisation einen mikroporösen ("internally microporous") glasigen Füllstoff, der durch Calcinieren von anorganischen Oxid-Solen, besonders solchen aus Siliciumdioxid, Aluminiumoxid und mindestens einem röntgenop aken Oxid (Zirkonium-, Hafnium-, Tantal- und Zinnoxid), hergestellt wird. Der Füllstoff kann zu 27 - 57 Gewichts-% aus Siliumdioxid bestehen.

EP 0 048 681 B1 betrifft ein Verfahren zur Herstellung einer Verbundmasse aus organischem Harz und anorganischen porösen Teilchen durch Imprägnieren der porösen anorganischen Teilchen mit mindestens teilweise aushärtbarem Harzmaterial, Zusammenpressen, so dass die Teilchen sich gegenseitig berühren und der Druck im Harz durch plastisches Fließen des überschüssigen Harzes durch die Poren der anorganischen Teilchen ausgeglichen wird, und Zusammenkleben der Teilchen durch Aushärten mindestens eines Teils des aushärtbaren Harzmaterials. Dabei bildet sich eine Harzstruktur mit einer angrenzenden anorganischen Phase. Die Verbundmasse eignet sich vorzugsweise zur Verwendung als zahnärztliches Material, einschließlich Füll- und Verkleidungsmaterial, Bindemittel, Material für Kronen und Brücken sowie Material für künstliche Gebisse und Zähne.

In EP 0172 513 B1 werden polymerisierbare Dentalmassen beschrieben, die neben 20 - 65 Gewichts-% polymerisierbaren Monomeren 10 - 60 Gewichts-% eines mikroporösen Füllstoffs aus Siliciumdioxid, Aluminiumoxid oder Calciumsilicat enthalten. Der mikroporöse Füllstoff weist eine mittlere Teilchengröße von 0,5-50 Mikrometer, eine BET-Oberfläche von mindestens 200 m²/g, ein Porenvolumen von 0,7 - 5 ml/g und einen Porendurchmesser von 10-50 Nanometer auf und kann silanisiert sein. Die Dentalmassen können zum Beispiel für zahnärztliche Restaurierungs- und Reparaturarbeiten, als Kronen- und Brückenmaterial sowie zur Herstellung künstlicher Zähne eingesetzt werden.

DE 195 24 362 A1 betrifft eine anorganische Zusammensetzung und ein diese Zusammensetzung enthaltendes dentales Komposit-Material für restaurative Zwecke. Die anorganische Zusammensetzung enthält (A) 60 bis 99 Gewichts-% sphärische Oxid-Teilchen mit einem durchschnittlichen Teilchendurchmesser von mehr als 0,1 Mikrometer, aber nicht mehr als 1 Mikrometer, und (B) 1 bis 40 Gewichts-% feine Oxid-Teilchen mit einem durchschnittlichen Teilchendurchmesser von nicht mehr als 0,1 Mikrometer, wobei das Volumen von Mikroporen aufgrund von stark aggregierten Teilchen mit Porendurchmessern nicht unter 0,08 Mikrometer nicht mehr als 0,1 cm³ pro Gramm der anorganischen Zusammensetzung beträgt. Bevorzugte Beispiele für die sphärischen Oxid-Teilchen sind amorphes Siliciumdioxid, Siliciumdioxid-Zirkoniumoxid, Siliciumdioxid-Titanoxid, Quarz, Aluminiumoxid und dergleichen. Die sphärischen Oxid-Teilchen werden im allgemeinen durch Hydrolyse eines Metalloxids hergestellt. Nach dem Trocknen werden sie häufig noch bei 500 bis 1000° C gebrannt, um den Anteil der Silanol-Gruppen auf den Oberflächen zu verringern. Beispiele für die feinen anorganischen Oxid-Teilchen sind pyrogenes Siliciumdioxid, pyrogenes Aluminiumoxid, pyrogenes Zirkoniumoxid, amorphes Siliciumdioxid, Quarz, Aluminiumoxid und dergleichen. Die anorganische Zusammensetzung besitzt eine mit einem Silan behandelte Oberfläche. Die aus dem Komposit-Material nach Aushärtung erhaltenen Produkte zeichnen sich durch gute mechanische Eigenschaften, glatte Oberflächenbeschaffenheit und einen nur sehr geringen Abrieb am Zahn-Antagonisten aus.

Gegenstand der Erfindung ist ein feinteiliger Füllstoff auf Siliciumdioxid-Basis, der dadurch gekennzeichnet ist, dass er aus porösem Siliciumdioxid-Glas, das eine Teilchengröße von 0,5 - 50 Mikrometer, eine Porengröße von 20 - 120 Nanometer, ein Porenvolumen von 200 - 1000 mm³/g und eine BET-Oberfläche von 10-100 m²/g aufweist und mit einer monomere (Meth)Acrylsäureester enthaltenden Imprägnierung versehen ist, besteht.

Vorzugsweise weist das poröse Siliciumdioxid-Glas eine Teilchengröße von 0,5 - 20 Mikrometer, eine Porengröße von 90 - 100 Nanometer, ein Porenvolumen von 800 - 900 mm³/g und eine BET-Oberfläche von 20 - 40 m²/g auf.

Das poröse Siliciumdioxid-Glas kann durch Anwendung des in DD 250 310 A1 beschriebenen Verfahrens und anschließendes Mahlen, zum Beispiel in einer Kugelmühle mit Zirkoniumoxid-Mahlkugeln, und Klassieren, zum Beispiel Windsichten, hergestellt werden.

Im Sinne der Erfindung werden unter monomere (Meth)Acrylsäureester ein oder mehrere monomere Acrylsäureester, Methacrylsäureester oder Gemische daraus verstanden.

Der erfindungsgemäße Füllstoff aus dem imprägnierten Siliciumdioxid-Glas lässt sich durch Behandlung des porösen Siliciumdioxid-Glases mit einem monomere (Meth)Acrylsäureester enthaltenden Imprägnierungsmittel herstellen. Dazu werden das poröse Glas und das Imprägnierungsmittel gründlich miteinander vermischt, vorzugsweise bei erhöhter Temperatur. Die Mischung wird anschließend einer Behandlung unter vermindertem Druck unterworfen, vorzugsweise ebenfalls bei erhöhter Temperatur.

Die Menge des für die Behandlung benutzten Imprägnierungsmittels hängt sowohl von dem Porenvolumen des Siliciumdioxid-Glases als auch von dem Verwendungszweck des aus dem imprägnierten Siliciumdioxid-Glas bestehenden Füllstoffes ab und lässt sich durch Versuche bestimmen.

Soll der Füllstoff aus dem imprägnierten Siliciumdioxid-Glas in trockener Form weiterverwendet werden, so empfiehlt es sich, bei einem Porenvolumen des Siliciumdioxid-Glases von beispielsweise 1000 mm³/g etwa gleiche Mengen an Glas und Imprägnierungsmittel einzusetzen.

Die monomeren (Meth)Acrylsäureester können monomere Mono-, Di- und Poly(meth)acrylate sein. Wird das Siliciumdioxid-Glas als Füllstoff in polymerisierbaren Dentalmaterialien eingesetzt, so werden die (Meth)Acrylsäureester unter den für solche Materialien an sich bekannten und bewährten (Meth)Acrylsäureestern ausgewählt. Bevorzugte Monomere sind
Hydroxyethylmethacrylat
Hydroxypropylmethacrylat
Triethylenglykolmonoethylethermono(meth)acrylat
Diurethandi(meth)acrylat aus 2,2,4-Trimethylhexamethylendiisocyanat und 2-Hydroxyethyl(meth)acrylat,
Diurethandi(meth)acrylat aus Bis-(diisocyanatomethyl)-tricyclodecan und 2-Hydroxyethyl(meth)acrylat,
Decandioldi(meth)acrylat,
Dodecandioldi(meth)acrylat,
Triethylenglykoldi(meth)acrylat,
Bis-[4-(2-hydroxy-3-methacryloyloxypropoxy)-phenyl]-dimethylmethan,
Bis-[4-(2-hydroxy-3-acryloyloxypropoxy)-phenyl]-dimethylmethan,
Tri(meth)acryloyloxyethoxytrimethylolpropan,
Tetra(meth)acryloyloxyethoxypentaerythrit,
Tetra(meth)acryloyloxyisopropoxypentaerythrit und
Hexa(meth)acryloyloxyethoxydipentaerythrit.

Besonders bewährt hat es sich, wenn für die Imprägnierung Imprägnierungsmittel eingesetzt werden, die neben den monomeren (Meth)Acrylsäureestern geeigneter Viskosität Polymerisation skatalysatoren enthalten. Die Polymerisationskatalysatoren können Katalysatoren für die Heißpolymerisation, die Kaltpolymerisation oder die Photopolymerisation sein. Geeignete Katalysatoren für die Heißpolymerisation sind zum Beispiel organische Peroxide, wie Dibenzoylperoxid, für die Kaltpolymerisation zum Beispiel die Redox-Systeme, vorzugsweise solche aus organischen Peroxiden und Aminen, und für die Photopolymerisation Keton/Amin-Systeme, wie sie aus GB 1408 265 B1 bekannt sind, zum Beispiel Campherchinon/Amin.

Imprägnierungen mit einem Katalysator für die Photopolymerisation werden - auch wegen der Möglichkeit der Ein-Komponenten-Formulierung - bevorzugt. Die Imprägnierung beziehungsweise das Mittel zu ihrer Herstellung enthält dann 0,1 - 0,5 Gewichts-%, vorzugsweise 0,1 - 0,3 Gewichts-%, eines Keton/Amin-Systems, wobei sich als Amine N,N-Dimethyl-p-toluidin, N,N-Bis-(2-hydroxyethyl)-p-toluidin und Ester der 4-Dimethylaminobenzoesäure, wie der Ethyl- und der Butoxyethylester, besonders bewährt haben. Als weiterer photoaktiver Bestandteil kann ein Benzilacetal, vorzugsweise in einer Menge von 0,02 - 0,1 Gewichts-%, zugegen sein.

Die Imprägnierung enthält vorzugsweise auch ein Silan, besonders 3-Methacryloyloxypropyltrimethoxysilan. Bewährt hat sich ein Silan-Gehalt von 1 - 8 Gewichts-% in der Imprägnierung beziehungsweise in dem Imprägnierungsmittel.

Der erfindungsgemäße Füllstoff aus dem mit der Imprägnierung versehenen Siliciumdioxid-Glas ist sehr gut zur Verwendung in polymerisierbaren Materialien geeignet. Überraschenderweise zeichnen sich die mit dem Füllstoff verstärkten Kunststoffe durch eine sehr gute Abrasionsfestigkeit (Verschleißfestigkeit) aus. Die Polymerisationsschrumpfung ist gering.

Zur näheren Erläuterung wird in dem folgenden Beispiel die Herstellung eines erfindungsgemäßen Füllstoffs aus dem porösen Siliciumdioxid-Glas, das mit monomeren (Meth)Acrylsäureestern, einem Katalysator-System für die Photopolymerisation und einem Silan imprägniert ist, beschrieben. Die Schrumpfung während der Polymerisation des imprägnierten Siliciumdioxid-Glases und die Abrasionsfestigkeit von durch Polymerisation aus dem mit den monomeren (Meth)Acrylsäureestern imprägnierten Siliciumdioxid-Glas erhaltenen Prüfkörpern werden bestimmt und mit entsprechenden Eigenschaften eines handelsüblichen Komposits (Charisma®, eingetragenes Warenzeichen für Heraeus Kulzer GmbH) bzw. der daraus hergestellten Prüfkörper verglichen.

### Beispiel

Füllstoff aus imprägniertem Siliciumdioxid-Glas

### Ausgangsprodukte

A) poröses Siliciumdioxid-Glas
Porengröße: 90-100 Nanometer
mittlere Teilchengröße: 8 Mikrometer
Porenvolumen: 880 mm³/g
BET-Oberfläche: 30 m²/g
B) Imprägnierungsflüssigkeit aus

| | |
|---|---|
| 41,24 g | Tetraacryloyloxyisopropoxypentaerythrit |
| 31,08 g | Bis-[4-(2-hydroxy-3-acryloyloxypropoxy)-phenyl]-dimethylmethan |
| 7,77 g | Hydroxypropylmethacrylat |
| 6,0 g | Triethylenglykolmonoethylethermonomethacrylat |
| 0,39 g | Benzildimethylacetal |
| 0,16 g | Campherchinon |
| 0,23 g | 4-Dimethylaminobenzoesäure-(2-butoxyethyl)-ester |
| 5,5 g | 3-Methacryloyloxypropyltrimethoxysilan |

Das Imprägnierungsmittel wird auf 70° C erwärmt und mit 90 g des porösen Siliciumdioxid-Glases versetzt. Die erhaltene Mischung wird 20 Minuten lang gerührt, bis das Imprägnierungsmittel das Glas gleichmäßig benetzt. Die Mischung wird dann 20 Minuten lang einem verminderten Druck (10⁻¹ bis 10⁻² Torr, 1,3332 10⁻² MPa bis 1,3332 10⁻³ MPa) ausgesetzt; die Temperatur wird bei 70° C gehalten. Nach dem Abkühlen auf Raumtemperatur wird der Füllstoff aus imprägniertem Siliciumdioxid-Glas in Form einer weißen, opaken Masse erhalten.

Zur Bestimmung der Polymerisationsschrumpfung werden aus dem imprägnierten Siliciumdioxid-Glas Prüfkörper mit einem Durchmesser von 15 mm und einer Dicke von 1 mm hergestellt. Auf die Oberfläche der Prüfkörper wird ein Laserstrahl fokussiert; gleichzeitig wird die Gegenseite der Prüfkörper mit einem Licht-Polymerisationsgerät (Translux EC der Firma Heraeus Kulzer GmbH, Deutschland) bestrahlt. Bedingt durch die bei der Polymerisation auftretende Schrumpfung, muss der Laserstrahl nachgeführt werden, um fokussiert zu bleiben. Der Unterschied der differierenden Fokussierung ist ein Maß für die lineare Polymerisationsschrumpfung der Prüfkörper.

Die Abrasionsfestigkeit wird durch Verschleißmessungen mit dem in Schweiz Monatsschr Zahnmed. Vol. 100 (1990), 953 - 960, beschriebenen Kausimulator bestimmt. Für die Verschleißmessungen werden Prüfkörper mit einem Durchmesser von 10 mm und einer Dicke von 2 mm, die durch 180 Sekunden langes Bestrahlen mit dem Licht-Polymerisationsgerät und Polieren mit Siliciumcarbid-Schleifpapier hergestellt werden, und ein Keramik-Stäbchen als Gegenzahnstempel benutzt.

Die Polymerisationsschrumpfung und die Abrasionsfestigkeit werden in der Tabelle angegeben.

### Tabelle

| **Prüfkörper** | **Polymerisationsschrumpfung [µm]** | **Abrasionsfestigkeit [µm]** |
|---|---|---|
| **Beispiel** | **7** | **25 - 40** |
| **Komposit (Vergleich)** | **14,00** | **90-100** |

## Patentansprüche

1. Feinteiliger Füllstoff auf Siliciumdioxid-Basis, **dadurch gekennzeichnet, dass** er aus porösem Siliciumdioxid-Glas, das eine Teilchengröße von 0,5 - 50 Mikrometer, eine Porengröße von 20 - 120 Nanometer, ein Porenvolumen von 200 - 1000 mm³/g und eine BET-Oberfläche von 10-100 m²/g aufweist und mit einer monomere (Meth)Acrylsäureester enthaltenden Imprägnierung versehen ist, besteht.

2. Füllstoff nach Anspruch 1, **dadurch gekennzeichnet, dass** das Siliciumdioxid-Glas eine Teilchengröße von 0,5 - 20 Mikrometer, eine Porengröße von 90-100 Nanometer, ein Porenvolumen von 800 - 900 mm³/g und eine BET-Oberfläche von 20 - 40 m²/g aufweist.

3. Füllstoff nach Anspruch 1 oder 2, **dadurch gekennzeichnet, dass** die Imprägnierung zusätzlich einen Katalysator für die Photopolymerisation enthält.

4. Füllstoff nach Anspruch 3, **dadurch gekennzeichnet, dass** der Katalysator für die Photopolymerisation ein Campherchinon/Amin-System ist.

5. Füllstoff nach einem der Ansprüche 1 bis 4, **dadurch gekennzeichnet, dass** die Imprägnierung zusätzlich ein Silan enthält.

6. Füllstoff nach Anspruch 5, **dadurch gekennzeichnet, dass** das Silan 3-Methacryloyloxypro pyltrimethoxysilan ist.

7. Verfahren zur Herstellung des Füllstoffs nach einem der Ansprüche 1 bis 6, **dadurch gekennzeichnet, dass** poröses Siliciumdioxid-Glas, das eine Teilchengröße von 0,5 - 50 Mikrometer, eine Porengröße von 20-120 Nanometer, ein Porenvolumen von 200-1000 mm³/g und eine BET-Oberfläche von 10-100 m²/g aufweist, mit einem monomere (Meth)Acrylsäureester enthaltenden Imprägnierungsmittel behandelt wird.

8. Verfahren nach Anspruch 7, **dadurch gekennzeichnet, dass** das Siliciumdioxid-Glas eine Teilchengröße von 0,5 - 20 Mikrometer, eine Porengröße von 90 - 100 Nanometer, ein Porenvolumen von 800 - 900 mm³/g und eine BET-Oberfläche von 20 - 40 m²/g aufweist.

9. Verfahren nach Anspruch 7 oder 8, **dadurch gekennzeichnet, dass** das Siliciumdioxid-Glas mit einem zusätzlich einen Katalysator für die Photopolymerisation enthaltenden Imprägnierungsmittel behandelt wird.

10. Verfahren nach Anspruch 9, **dadurch gekennzeichnet, dass** als Katalysator für die Photopolymerisation ein Campherchinon/Amin-System eingesetzt wird.

11. Verfahren nach einem der Ansprüche 7 bis 10, **dadurch gekennzeichnet, dass** das Siliciumdioxid-Glas mit einem zusätzlich ein Silan enthaltenden Imprägnierungsmittel behandelt wird.

12. Verfahren nach Anspruch 11, **dadurch gekennzeichnet, dass** als Silan 3-Methacryloylox ypropyltrimethoxysilan eingesetzt wird.

13. Verwendung des Füllstoffes nach einem der Ansprüche 1 bis 6 in polymerisierbaren Materialien.

## Claims

1. Finely divided silica-based filler, **characterized in that** it consists of porous silica glass which has a particle size of 0.5-50 µm, a pore size of 20-120 nanometres, a pore volume of 200-1000 mm³/g and a BET surface area of 10-100 m²/g and is provided with an impregnation containing monomeric (meth)acrylates.

2. Filler according to Claim 1, **characterized in that** the silica glass has a particle size of 0.5-20 µm, a pore size of 90-100 nanometres, a pore volume of 800-900 mm³/g and a BET surface area of 20-40 m²/g.

3. Filler according to Claim 1 or 2, **characterized in that** the impregnation additionally contains a catalyst for the photopolymerization.

4. Filler according to Claim 3, **characterized in that** the catalyst for the photopolymerization is a camphorquinone/amine system.

5. Filler according to any of Claims 1 to 4, **characterized in that** the impregnation additionally contains a silane.

6. Filler according to Claim 5, **characterized in that** the silane is 3-methacryloyloxypropyltrimethoxysilane.

7. Process for the preparation of the filler according to any of Claims 1 to 6, **characterized in that** porous silica glass which has a particle size of 0.5-50 µm, a pore size of 20-120 nanometres, a pore volume of 200-1000 mm³/g and a BET surface area of 10-100 m²/g is treated with an impregnating agent containing monomeric (meth)acrylates.

8. Process according to Claim 7, **characterized in that** the silica glass has a particle size of 0.5-20 µm, a pore size of 90-100 nanometres, a pore volume of 800-900 mm³/g and a BET surface area of 20-40 m²/g .

9. Process according to Claim 7 or 8, **characterized in that** the silica glass is treated with an impregnating agent additionally containing a catalyst for the photopolymerization.

10. Process according to Claim 9, **characterized in that** a camphorquinone/amine system is used as the catalyst for the photopolymerization.

11. Process according to any of Claims 7 to 10, **characterized in that** the silica glass is treated with an impregnating agent additionally containing a silane.

12. Process according to Claim 11, **characterized in that** the silane used is 3-methacryloyloxypropyltrimethoxysilane.

13. Use of the filler according to any of the Claims 1 to 6 in polymerizable materials.

## Revendications

1. Charge à base de silice, à fines particules, **caractérisée en ce qu'**elle se compose de verre de silice poreux, qui présente une grosseur de particule de 0,5-50 µm, une grosseur de pore de 20-120 nanomètres, un volume de pore de 200-1000 mm³/g et une surface BET de 10-100 m²/g et qui est pourvu d'une imprégnation contenant un ester d'acide (méth)acrylique monomère.

2. Charge selon la revendication 1, **caractérisée en ce que** le verre de silice présente une grosseur de particule de 0,5-20 µm, une grosseur de pore de 90-100 nanomètres, un volume de pore de 800-900 mm³/g et une surface BET de 20-40 m²/g.

3. Charge selon la revendication 1 ou 2, **caractérisée en ce que** l'imprégnation contient en plus un catalyseur pour la photopolymérisation.

4. Charge selon la revendication 3, **caractérisée en ce que** le catalyseur pour la photopolymérisation est un système quinone de camphre/amine.

5. Charge selon une des revendications 1 à 4, **caractérisée en ce que** l'imprégnation contient en plus un silane.

6. Charge selon la revendication 5, **caractérisée en ce que** le silane est un 3-méthacryloyloxypropyltriméthoxysilane.

7. Procédé pour la production de la charge selon une des revendications 1 à 6, **caractérisé en ce que** le verre de silice poreux, qui présente une grosseur de particule de 0,5-50 µm, une grosseur de pore de 20-120 nanomètres, un volume de pore de 200-1000 mm³/g et une surface BET de 10-100 m²/g, est traité par un agent d'imprégnation contenant un ester d'acide (méth)acrylique monomère.

8. Procédé selon la revendication 7, **caractérisé en ce que** le verre de silice présente une grosseur de particule de 0,5-20 µm, une grosseur de pore de 90-100 nanomètres, un volume de pore de 800-900 mm³/g et une surface BET de 20-40 m²/g.

9. Procédé selon la revendication 7 ou 8, **caractérisé en ce que** le verre de silice est traité par un agent d'imprégnation contenant en plus un catalyseur pour la photopolymérisation.

10. Procédé selon la revendication 9, **caractérisé en ce qu'**un système quinone de camphre/amine est utilisé comme catalyseur pour la photopolymérisation.

11. Procédé selon une des revendications 7 à 10, **caractérisé en ce que** le verre de silice est traité par un agent d'imprégnation contenant en plus un silane.

12. Procédé selon la revendication 11, **caractérisé en ce que** du 3-méthacryloyloxypropyltriméthoxysilane est utilisé comme silane.

13. Utilisation de la charge selon une des revendications 1 à 6 dans des matières polymérisables.
